# EUROPÄISCHE PATENTSCHRIFT

(11) **EP 1 511 773 B1**
(45) Veröffentlichungstag und Bekanntmachung des Hinweises auf die Patenterteilung: **26.12.2007**
(21) Anmeldenummer: 03732337.5
(22) Anmeldetag: 09.05.2003
(51) Int. Cl.: C08B 15/06

(54) **VERFAHREN ZUR HERSTELLUNG VON CELLULOSECARBAMAT MITTELS REAKTIVER EXTRUSION**
METHOD FOR THE PRODUCTION OF CELLULOSE CARBAMATE BY MEANS OF REACTIVE EXTRUSION
PROCEDE DE PRODUCTION DE CARBAMATE DE CELLULOSE PAR EXTRUSION REACTIVE

(30) Priorität: 24.05.2002 DE 10223172
(43) Veröffentlichungstag der Anmeldung: 09.03.2005
(73) Patentinhaber: Fraunhofer-Gesellschaft zur Förderung der angewandten Forschung e.V., 80686 München (DE)
(72) Erfinder: LOTH, Fritz, 14513 Teltow (DE); FINK, Hans-Peter, 14513 Teltow (DE); WEIGEL, Peter, 14532 Kleinmachnow (DE)
(86) Internationale Anmeldenummer: PCT/EP2003/004880
(87) Internationale Veröffentlichungsnummer: WO 2003/099872

(56) Entgegenhaltungen:
- EP-A- 0 178 292
- WO-A-98/02464
- WO-A-02/060956
- DE-A- 19 835 688
- GB-A- 516 672

## Beschreibung

Die Erfindung betrifft ein Verfahren zur Herstellung von Cellulosecarbamat durch reaktive Extrusion sowie zur Herstellung von Formkörpern aus Regeneratcellulose.

Weltweit werden gegenwärtig erhebliche Mengen an Produkten aus Regeneratcellulose wie Fasern, Folien und andere Formkörper, vorwiegend nach dem Viskoseverfahren hergestellt. Wegen der mit diesem Verfahren verbundenen hohen Umweltbelastung und der erheblichen Investitionskosten werden jedoch bereits seit etlichen Jahren umfangreiche Anstrengungen unternommen, das Viskoseverfahren durch alternative Verfahren abzulösen. So wurde z.B. das Verfahren entwickelt, Celluloseformkörper durch Ausfällen einer Lösung von Cellulose in einem System aus N-Methylmorpholin-N-Oxid und Wasser herzustellen (DE 44 21 482). Das Verfahren besitzt jedoch den Nachteil einer relativ geringen Variationsbreite der Produkteigenschaften.

Somit besteht weiterhin ein allgemeines Interesse daran, weitere Verfahren zur Herstellung von Formkörpern aus Regeneratcellulose bereitzustellen, die den Ansprüchen an die Variationsbreite der Produkteigenschaften, z.B. von Fasern für den Einsatz im textilen Bereich, genügen.

Ein schon lange bekanntes Verfahren zur Herstellung von Formkörpern aus Regeneratcellulose besteht in der Herstellung von Cellulosecarbamat, das in kalter verdünnter Natronlauge löslich ist und in erwärmter Natronlauge wieder zu Cellulose regeneriert werden kann.

Die Bildung von Cellulosecarbamat erfolgt durch Umsetzung von Cellulose mit Harnstoff bei thermischer Spaltung des Harnstoffs in Isocyansäure und Ammoniak und Reaktion der Isocyansäure mit den OH-Gruppen der Cellulose. Für eine ausreichend hohe Konzentration und gleichmäßige Verteilung der Carbamatgruppen ist die Aktivierung der Cellulose notwendig, welche die kristallinen Strukturen der Cellulose so aufweitet, daß in den kristallinen Bereichen ebenso wie in den amorphen Bereichen eine genügend hohe Harnstoffkonzentration vorliegt und die Reaktivität der Hydroxylgruppen in den kristallinen und den amorphen Bereichen annähernd gleich ist.

In der EP-A 57 105 wird ein Verfahren beschrieben, bei dem die Imprägnierung mit Harnstoff und die Aktivierung durch flüssiges Ammoniak erfolgt. Nach Abdampfen des Ammoniaks erfolgt die Umsetzung der Cellulose zu Cellulosecarbamat bei Temperaturen oberhalb des Schmelzpunktes des Harnstoffs in einem Trockenschrank. Ein Nachteil des Verfahrens sind die hohen Kosten durch die Verwendung des flüssigen Ammoniaks bei tiefen Temperaturen. Ein noch wesentlicherer Nachteil ist jedoch, daß wegen der schlechten Wärmeleitfähigkeit der Cellulose eine gleichmäßige Temperaturverteilung im Reaktionsgemisch nicht gewährleistet ist, was zu einer Inhomogenität der Substituentenverteilung der Carbamatgruppen und damit zu einem uneinheitlichen und großtechnisch schlecht verwertbaren Produkt führt.

In dem in der EP-A 178 292 beschriebenen Verfahren wird die Cellulose mit Natronlauge getränkt und diese anschließend mit harnstoffhaltigen Wasser, das gleichzeitig den Harnstoff in die Cellulose einträgt, ausgewaschen. Nach Trocknung erfolgt wieder die Umsetzung bei Temperaturen oberhalb des Schmelzpunktes des Harnstoffs. Es existieren jedoch auch hier die oben genannten Probleme der ungleichmäßigen Substituentenverteilung.

Nachteilig ist weiterhin, daß in den beschriebenen Verfahren bei Reaktionstemperaturen von 130 bis 150 Grad Celsius Reaktionszeiten von ca. 2 Stunden erforderlich sind. Damit ist ein für einen großtechnischen Produktionsablauf erwünschter kontinuierlicher Betrieb schwer realisierbar.

Aufgabe der vorliegenden Erfindung ist es daher, ein Verfahren zur Herstellung von Cellulosecarbamat bereitzustellen, das einen kontinuierlichen Produktionsablauf gewährleistet und eine gute Homogenität der Substituentenverteilung und damit gute Produkteigenschaften liefert. Eine weitere verfahrensseitige Aufgabe der Erfindung.besteht darin, daß das vorzuschlagende Verfahren den Ansprüchen hinsichtlich geringer Investitions- und Produktionskosten und geringer Umweltbelastung genügt.

Diese Aufgabe wird durch das Verfahren mit den Merkmalen des Anspruchs 1 sowie das hierüber hergestellte Cellulosecarbamant gemäß Anspruch 11 gelöst. Die weiteren abhängigen Ansprüche zeigen vorteilhafte Weiterbildungen auf. Die Verwendung des Verfahrens wird in den Ansprüchen 13 bis 15 beschrieben.

Erfindungsgemäß wird ein Verfahren zur Herstellung von Cellulosecarbamat bereitgestellt, das auf folgenden Verfahrensschritten beruht:
a) Die Cellulose wird mit einer Aktivierungslösung vom Harnstoff in Alkalilauge behandelt.
b) Die Aktivierungslösung wird von der nun aktivierten Cellulose abgetrennt.
c) Im Anschluß erfolgt eine reaktive Extrusion der aktivierten Cellulose bei Temperaturen zwischen 180 und 280 Grad Celsius. Das bei dieser Rekation freigesetzte Ammoniakgas wird gleichzeitig dem Gleichgewicht entzogen.

Überraschenderweise konnte gezeigt werden, daß bei den genannten Temperaturen der reaktiven Extrusion eine sehr geringe Reaktionszeit ausreicht, um einen Substituierungsgrad von etwa 20 % zu erreichen. Derartige Substituierungsgrade garantieren dabei eine gute Löslichkeit des Cellulosecarbamats in verdünnter Natronlauge. Infolge der kurzen Reaktionszeit weist das Verfahren den wesentlichen Vorteil auf, daß keine thermische Schädigung der Cellulose eintreten kann. Dabei erlaubt die kurze Reaktionszeit auch die problemlose kontinuierliche Prozeßführung in einem Extruder.

Vorzugsweise weist die Aktivierungslösung zwischen 5 und 25, bevorzugt zwischen 10 und 20 Gew.-% Natronlauge auf. Dabei liegt in dieser Lösung das Gewichtsverhältnis zwischen Natronlauge zu Harnstoff zwischen 4:1 und 1:1, bevorzugt zwischen 3:1 und 2:1.

In einer vorteilhaften Weiterbildung des Verfahrens kann der Aktivierungslösung ein Weichmacher zugesetzt werden, wobei hierfür bevorzugt Glycerin und/oder Polyäthylenglykol verwendet wird. Der Anteil des Weichmachers in der Aktivierungslösung beträgt dabei zwischen 5 und 20 Gew.-%, besonders bevorzugt zwischen 10 und 15 Gew.-%.

Nach der Aktivierung wird die Abtrennung der Aktivierungslösung bevorzugt durch Abpressen der Cellulose realisiert. Dieses Abpressen wird dabei bevorzugt solange durchgeführt, bis sich ein Massenverhältnis zwischen Cellulose und Aktivierungslösung von 1:1 bis 1:2 eingestellt hat.

Vorzugsweise wird die reaktive Extrusion zwischen 200 und 260 Grad Celsius durchgeführt. Die Reaktionszeit beträgt dabei vorzugsweise zwischen 1 und 10 Minuten und besonders bevorzugt zwischen 2 und 5 Minuten.

In einer vorteilhaften Weiterbildung wird im Anschluß an die reaktive Extrusion das Cellulosecarbamat ausgewaschen, das heißt der überschüssige Harnstoff, die Natronlauge und weitere Reaktionsprodukte abgetrennt. Das derart erhaltene Cellulosecarbamat ist in kalter 8 bis 10 Gew.-%iger Natronlauge löslich, wobei die Cellulosecarbamatkonzentration zwischen 8 und 10 Gew.-% erreicht werden können.

Erfindungsgemäß wird ebenso Cellulosecarbamat bereitsgestellt, das nach dem erfindungsgemäßen Verfahren hergestellt wurde. Besonderer Vorteil des derart hergestellten Cellulosecarbamats ist es, daß ein Substituierungsgrad ≥ 20 % erreicht werden kann, womit die gute Löslichkeit des Cellulosecarbamants in verdünnter Natronlauge ermöglicht wird.

Verwendung findet das Verfahren zur Herstellung von Formköpern aus Cellulosecarbamat und/oder Regeneratcellulose. Hierbei wird das Cellulosecarbamat mittels Alkalilauge in eine Spinnlösung überführt und diese im Anschluß über formgebende Düsen in ein Fellbad eingeleitet. Als formgebende Düsen werden dabei bevorzugt Spinndüsen verwendet, die die Spinnlösung in das Fellbad, z.B. Schwefelsäure, überführen. In gleicher Weise ist es möglich, Formkörper aus Regeneratcellulose herzustellen, wobei die aus dem Stand der Technik bekannte Vorgehensweise durch Auflösen der Cellulose in Alkalilauge eingesetzt wird. Typische Beispiele für derartig herstellbare Formkörper sind Fasern, Folien, Perlen, Schwämme oder Schwammtücher.

Anhand der folgenden Beispiele soll der erfindungsgemäße Gegenstand näher erläutert werden, ohne diesen auf diese Ausführungsbeispiele zu beschränken.

### Beispiel 1:

200 g Kiefern-Sulfat-Zellstoff mit einem DP=510 werden in einer mit 600g einer wässrigen Lösung enthaltend 180 g Harnstoff, 50 g Glycerin und 35 g NaOH 60 min getaucht, zentrifugiert und auf einen Cellulosegehalt von 43 % abgepreßt. Die Masse wird in einem Labormischer 20 min homogenisiert. Anschließend erfolgt die Eingabe in einen Doppelschneckenextruder PTW 25. Die maximale Temperatur des in der Austragszone des Extruder beträgt 240 Grad Celsius. Die Verweildauer im Extruder beträgt 4 min. Die trockene krümelige Masse wird 1mal mit essigsaurem Wasser und 3mal mit entionisiertem Wasser gewaschen und zentrifugiert. Das feuchte Carbamat weist einen Trockengehalt von 50%, einen DP=385 und einen Stickstoffgehalt von 3,25% bezogen auf den Cellulosegehalt auf.

### Beispiel 2:

200 g Kiefern-Sulfat-Zellstoff mit einem DP=510 werden in einer mit 600 g einer wässrigen Lösung enthaltend 180 g Harnstoff, 50 g Glycerin und 35 g -NaOH 60 min getaucht, zentrifugiert und auf einen Cellulosegehalt von 43 % abgepreßt. Die Masse wird in einem Labormischer 20 min homogenisiert. Anschließend erfolgt die Eingabe in einen Doppelschneckenextruder PTW 25. Die maximale Temperatur des in der Austragszone des Extruder beträgt 260 Grad Celsius. Die Verweildauer im Extruder beträgt 2 min. Die trockene krümelige Masse wird 1mal mit essigsaurem Wasser und 3mal mit entionisiertem Wasser gewaschen und zentrifugiert. Das feuchte Carbamat weist einen Trockengehalt von 50%, einen DP=345 und einen Stickstoffgehalt von 3,65% bezogen auf den Cellulosegehalt auf.

## Patentansprüche

1. Verfahren zur Herstellung von Cellulosecarbamat mit folgenden Schritten:
a) Aktivierung der Cellulose mit einer Aktivierungslösung von Harnstoff in Alkalilauge,
b) Abtrennung der Aktivierungslösung von der Cellulose,
c) reaktive Extrusion der aktivierten Cellulose bei einer Temperatur zwischen 180°C und 280°C, wobei das hierbei freigesetzte Ammoniakgas dem Gleichgewicht entzogen wird.

2. Verfahren nach Anspruch 1,
**dadurch gekennzeichnet, dass** die Aktivierungslösung 5 bis 25, bevorzugt 10 bis 20 Gew.-% Natronlauge enthält.

3. Verfahren nach mindestens einem der Ansprüche 1 oder 2,
**dadurch gekennzeichnet, dass** das Gewichtsverhältnis zwischen Natronlauge und Harnstoff in der Aktivierungslösung zwischen 4:1 und 1:1, bevorzugt zwischen 3:1 und 2:1 in der Lösung beträgt.

4. Verfahren nach mindestens einem der Ansprüche 1 bis 3,
**dadurch gekennzeichnet, dass** der Aktivierungslösung von Harnstoff in Alkalilauge ein Weichmacher zugesetzt wird.

5. Verfahren nach mindestens einem der Ansprüche 1 bis 4,
**dadurch gekennzeichnet, dass** als Weichmacher Glycerin und/oder Polyethylenglykol verwendet wird.

6. Verfahren nach mindestens einem der Ansprüche 1 bis 3,
**dadurch gekennzeichnet, dass** der Anteil des Weichmachers zwischen 5 und 20 Gew.-%, bevorzugt zwischen 10 und 15 Gew.-%, bezogen auf die Aktivierungslösung beträgt.

7. Verfahren nach mindestens einem der Ansprüche 1 bis 6,
**dadurch gekennzeichnet, dass** die Abtrennung durch Abpressen bis zu einem Massenverhältnis von Cellulose zu Aktivierungslösung von 1:1 bis 1:2 erfolgt.

8. Verfahren nach mindestens einem der Ansprüche 1 bis 7,
**dadurch gekennzeichnet, dass** die reaktive Extrusion zwischen 200 und 260°C durchgeführt wird,
wobei die Reaktionszeit zwischen 1 und 10, bevorzugt zwischen 2 und 5 min beträgt.

9. Verfahren nach mindestens einem der Ansprüche 1 bis 8,
**dadurch gekennzeichnet, dass** das Celullosecarbamat im Anschluß ausgewaschen wird.

10. Cellulosecarbamat hergestellt durch das Verfahren nach mindestens einem der Ansprüche 1 bis 9.

11. Cellulosecarbamt nach Anspruch 10,
**dadurch gekennzeichnet, dass** der Substituierungsgrad des Cellulosecarbamt größer oder gleich 20 % ist.

12. Verwendung des Verfahrens nach mindestens einem der Ansprüche 1 bis 9 zur Herstellung von Formkörpern aus Cellulosecarbamat und/oder Regeneratcellulose, bei der das Cellulosecarbamat mittels Alkalilauge in eine Spinnlösung überführt und diese im Anschluß über formgebende Düsen in ein Fällbad eingeleitet wird.

13. Verwendung nach Anspruch 12,
**dadurch gekennzeichnet, dass** die Formkörper aus Cellulosecarbamt in Alkalilauge zu Regeneratcellulose umgesetzt werden.

14. Verwendung nach einem der Ansprüche 12 oder 13,
**dadurch gekennzeichnet, dass** als Formkörper Fasern, Folien, Perlen, Schwämme oder Schwammtücher hergestellt werden.

## Claims

1. Process for producing cellulose carbamate comprising the steps of:
a) activating the cellulose with an activating solution of urea in aqueous alkali metal hydroxide solution,
b) separating the activating solution from the cellulose,
c) reactive extrusion of the activated cellulose at a temperature between 180°C and 280°C, the released ammonia gas being removed from the equilibrium.

2. Process according to Claim 1, **characterized in that** the activating solution contains 5% to 25% and preferably 10% to 20% by weight of aqueous sodium hydroxide solution.

3. Process according to at least one of Claims 1 and 2, **characterized in that** the weight ratio between aqueous sodium hydroxide and urea in the activating solution is between 4:1 and 1:1 and preferably between 3:1 and 2:1 in the solution.

4. Process according to at least one of Claims 1 to 3, **characterized in that** a plasticizer is added to the activating solution of urea in aqueous alkali metal hydroxide solution.

5. Process according to at least one of Claims 1 to 4, **characterized in that** the plasticizer used is glycerol and/or polyethylene glycol.

6. Process according to at least one of Claims 1 to 3, **characterized in that** the plasticizer fraction is between 5% and 20% by weight and preferably between 10% and 15% by weight, based on the activating solution.

7. Process according to at least one of Claims 1 to 6, **characterized in that** the separating is effected by squeezing off to a mass ratio of 1:1 to 1:2 for cellulose to activating solution.

8. Process according to at least one of Claims 1 to 7, **characterized in that** the reactive extrusion is carried out at between 200 and 260°C, the reaction time being between 1 and 10 min and preferably between 2 and 5 min.

9. Process according to at least one of Claims 1 to 8, **characterized in that** the cellulose carbamate is subsequently washed off.

10. Cellulose carbamate produced by the process according to at least one of Claims 1 to 9.

11. Cellulose carbamate according to Claim 10,
**characterized in that** the degree of substitution of the cellulose carbamate is not less than 20%.

12. Use of the process according to at least one of Claims 1 to 9 for producing shaped articles of cellulose carbamate and/or regenerated cellulose wherein the cellulose carbamate is converted by means of aqueous alkali metal hydroxide solution into a spinning solution and this spinning solution is subsequently passed via shape-conferring dies into a coagulation bath.

13. Use according to Claim 12, **characterized in that** the shaped articles of cellulose carbamate are converted in aqueous alkali metal hydroxide solution into regenerated cellulose.

14. Use according to either of Claims 12 and 13, **characterized in that** the shaped articles produced are fibres, films, beads, sponges or sponge cloths.

## Revendications

1. Procédé pour la préparation de carbamate de cellulose, comportant les étapes suivantes :
a) activation de la cellulose avec une solution d'activation composée d'urée dans une solution d'hydroxyde de métal alcalin,
b) séparation de la solution d'activation d'avec la cellulose,
c) extrusion réactive de la cellulose activée, à une température comprise entre 180 °C et 280 °C, le gaz ammoniac libéré lors de cette extrusion étant soustrait à l'équilibre.

2. Procédé selon la revendication 1, **caractérisé en ce que** la solution d'activation contient une solution d'hydroxyde de sodium à 5-25, de préférence à 10-20 % en poids.

3. Procédé selon la revendication 1 ou 2, **caractérisé en ce que** le rapport d'équilibre entre solution d'hydroxyde de sodium et urée dans la solution d'activation est compris entre 4:1 et 1:1, de préférence entre 3:1 et 2:1 dans la solution.

4. Procédé selon au moins l'une des revendications 1 à 3, **caractérisé en ce qu'**on ajoute un plastifiant à la solution d'activation composée d'urée dans une solution d'hydroxyde de métal alcalin.

5. Procédé selon au moins l'une des revendications 1 à 4, **caractérisé en ce qu'**on utilise comme plastifiant le glycérol et/ou le polyéthylèneglycol.

6. Procédé selon au moins l'une des revendications 1 à 3, **caractérisé en ce que** la proportion du plastifiant est comprise entre 5 et 20 % en poids, de préférence entre 10 et 15 % en poids, par rapport à la solution d'activation.

7. Procédé selon au moins l'une des revendications 1 à 6, **caractérisé en ce que** la séparation s'effectue par expression jusqu'à un rapport en masse de cellulose à solution d'activation de 1:1 à 1:2.

8. Procédé selon au moins l'une des revendications 1 à 7, **caractérisé en ce que** l'extrusion réactive est effectuée à une température comprise entre 200 et 260 °C, le temps de réaction étant compris entre 1 et 10, de préférence entre 2 et 5 minutes.

9. Procédé selon au moins l'une des revendications 1 à 8, **caractérisé en ce que** le carbamate de cellulose est ensuite lavé.

10. Carbamate de cellulose préparé par le procédé selon au moins l'une des revendications 1 à 9.

11. Carbamate de cellulose selon la revendication 10, **caractérisé en ce que** le degré de substitution du carbamate de cellulose est supérieur ou égal à 20%.

12. Utilisation du procédé selon au moins l'une des revendications 1 à 9, pour la fabrication de corps moulés à base de carbamate de cellulose et/ou de cellulose régénérée, dans laquelle le carbamate de cellulose est transformé en une solution de filage avec une solution d'hydroxyde de métal alcalin et celle-ci est ensuite introduite dans un bain de filage au moyen de filières de mise en forme

13. Utilisation selon la revendication 12, **caractérisée en ce que** les corps moulés à base de carbamate de cellulose sont convertis en cellulose régénérée dans une solution d'hydroxyde de métal alcalin.

14. Utilisation selon la revendication 12 ou 13, **caractérisée en ce qu'**on fabrique en tant que corps moulés des fibres, des films, des perles, des éponges ou des chiffons éponge
